(19) Europäisches Patentamt
European Patent Office
Office européen des brevets

(11) **EP 3 767 542 A1**

(12) **EUROPEAN PATENT APPLICATION**

(43) Date of publication:
**20.01.2021 Bulletin 2021/03**

(51) Int Cl.:
***G06N 3/04*** (2006.01)  ***G06N 3/08*** (2006.01)

(21) Application number: **19186780.3**

(22) Date of filing: **17.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Straehle, Christoph-Nikolas
71263 Weil Der Stadt (DE)**
• **Bhattacharyya, Apratim
66125 Saarbruecken (DE)**

(54) **TRAINING AND DATA SYNTHESIS AND PROBABILITY INFERENCE USING NONLINEAR CONDITIONAL NORMALIZING FLOW MODEL**

(57) The learning of probability distributions of data enables various applications, including but not limited to data synthesis and probability inference. A conditional non-linear normalizing flow model, and a system and method for training said model, are provided. The normalizing flow model may be trained to model unknown and complex conditional probability distributions which are at the heart of many real-life applications. For example, the trained normalizing flow model may be used in (semi)autonomous driving systems to infer what the probability is that a pedestrian is at position $x$ at future time $t$ given the pedestrian features $c$, which may be observed from sensor data, or may be used to synthesize likely pedestrian positions x at future time t given the observed pedestrian features c. This may allow the driving system to determine a route avoiding the pedestrian. Various other applications for the trained normalizing flow model are conceived as well.

Fig. 4

**Description**

**FIELD OF THE INVENTION**

The invention relates to a system and computer-implemented method for training a normalizing flow model for use in data synthesis or probability inference. The invention further relates to a system and computer-implemented method for synthesizing data instances using a trained normalizing flow model, and to a system and computer-implemented method for inferring a probability of data instances using a normalizing flow model. The invention further relates to a trained normalizing flow model. The invention further relates to a computer-readable medium comprising data representing instructions arranged to cause a processor system to perform the computer-implemented method.

**BACKGROUND OF THE INVENTION**

Unknown probability distributions of data are at the heart of many real-life problems, and may be estimated ('learned') from the data using machine learning. Having estimated the probability distribution, a probability may be inferred, for example of a specific event happing, such as a failure in a mechanical part, or to synthesize new data, which conforms to the probability distribution of the data, for example to generate synthetic images.

In many real-life applications, it may be desirable to specifically learn a conditional probability distribution of data, referring to a probability distribution of $X$ given $C$, with $C$ referring to a set of conditions. Having learned such a conditional probability distribution, a condition $c$ may be observed from sensor data in real-time, and it may be determined using the learned conditional probability distribution what the probability of occurrence of $x$ is given $c$. One example is predicting the future position $x$ of a traffic participant from a conditional probability distribution, which has been learned from training data, $X$ and depends on pedestrian features $C$, such as a past trajectory of a pedestrian, a direction in which the pedestrian looks, a body orientation, etc., and as a function of a future time $t$. Such a conditional probability distribution may be expressed as $p(x|c,t)$.

Using the learned conditional probability distribution, it may be determined ('inferred') from the learned conditional probability distribution what the probability is that a pedestrian is at position $x$ at future time $t$ given the observed pedestrian features $c$. Such probability inference may be used by a control system, for example of an (semi)autonomous vehicle. For example, if the (semi)autonomous vehicle is currently on a route which takes it to position $x$ at time $t$, the control system may use the learned conditional probability distribution to determine what the probability is that a pedestrian, for which pedestrian features $c$ have been observed from sensor data, will be at that position $x$ at that particular time, and stop or adjust the route if the probability is higher than a certain threshold.

Another application is sampling from the conditional probability distribution $p(x|c,t)$ to synthesize pedestrian positions $x$ at future time t given the observed pedestrian features $c$. Having synthesized such positions $x$ at which the pedestrian is likely to be at future time t, the control system may then direct the (semi)autonomous vehicle along a route, which avoids all synthesized positions $x$ and therefore is likely to avoid to the pedestrian.

Various other applications for learned probability distributions exist as well, including but not limited to the control of other types of autonomous vehicles or robots.

It is known to use so-called normalizing flows for learning probability distributions, which can learn the probability distribution of a dataset $X$ by transforming the unknown distribution $p(X)$ with a parametrized invertible mapping $f_\theta$ to a known probability distribution $p(Y)$. For example, the publication [1] describes a deep learning framework for modeling complex high-dimensional densities called Nonlinear Independent Component Estimation (NICE). In NICE, a nonlinear deterministic transformation of the data is learned that maps it to a latent space so as to make the transformed data conform to a factorized distribution, resulting in independent latent variables. This transformation is parameterized so that computing the Jacobian determinant and inverse transform is trivial. It is said that NICE enables learning complex nonlinear transformations, via a composition of simple building blocks, each based on a deep neural network and referred to as a coupling layer.

Disadvantageously, NICE and similar approaches cannot learn conditional probability distributions and are therefore limited in their real-life applicability. Namely, many real-life problems require the learning of conditional probability distributions. In addition, while conditional normalizing flows exist, for example as described in publication [2], such normalizing flows are based on affine (linear) coupling layers which are typically unable to accurately model complex multimodal conditional probability distributions, such as those of the above example of trajectories of pedestrians given observed pedestrian features.

**References**

[1] 'NICE - Nonlinear independent component estimation', Laurent Dinh et al., https://arxiv.org/abs/1410.8516
[2] 'Semi-conditional normalizing flows for semi-supervised learning', Andrei Atanov et al., https://arxiv.org/abs/1905.00505

## SUMMARY OF THE INVENTION

It would be desirable to enable more complex multimodal conditional probability distributions to be learned by normalizing flow models, thereby enabling such learned normalizing flow models to be used for data synthesis and probability inference.

In accordance with a first aspect of the invention, a computer-implemented method and a system are provided for training a normalizing flow model, as defined by claim 1 and 13, respectively. In accordance with a further aspect of the invention, a computer-implemented method and a system are provided for synthesizing data instances using a trained normalizing flow model, as defined by claim 9 and 14, respectively. In accordance with a further aspect of the invention, a computer-implemented method and a system are provided for inferring a probability of data instances using a normalizing flow model, as defined by claim 10 and 15, respectively. In accordance with a further aspect of the invention, a computer-readable medium is provided comprising transitory or non-transitory data representing model data defining a normalizing flow model, as defined by claim 8. In accordance with a further aspect of the invention, as defined by claim 16, a computer-readable medium is provided comprising data representing instructions arranged to cause a processor system to perform the computer-implemented method of any of claims 13 to 15.

The above measures firstly define a normalizing flow model and its training for use in data synthesis or probability inference. For the training, training data is accessed which comprises data instances having an unknown probability distribution. In addition, conditioning data is accessed which defines conditions for the data instances. For example, if the data instances represent events, the conditioning data may define conditions, which are associated with the occurrence of the events. In another example, if the data instances represent positions of an object, the conditioning data may define conditions associated with the object, such as one or more past positions of the object, e.g., in the form of a trajectory, or other features of the object, such as the type of object or its orientation, etc.

In addition, model data is accessed which defines, in computer-readable form, a normalizing flow model. Like known types of normalizing flow models, the normalizing flow model defined by the model data defines an invertible mapping to a sample space having a known probability distribution. For that purpose, the normalizing flow model comprises a series of invertible transformation functions in the form of a series of layers, which may include known layers such as the so-called coupling layers. However, unlike known types of normalizing flow models, the normalizing flow model defined by the model data comprises a nonlinear coupling layer and is specifically configured to model a conditional probability distribution of the training data using the nonlinear coupling layer.

The nonlinear coupling layer itself may comprise a nonlinear term, which may be parameterized by one or more parameters obtained by the respective outputs of one or more neural networks. The normalizing flow model may then be trained by training the one or more neural networks. More specifically, the one or more neural networks are trained to establish the one or more parameters of the nonlinear term as one or more conditional parameters which are dependent not only on the data instances but also on the associated conditions. The training itself may use a log-likelihood-based training objective.

As a result, a trained normalizing flow model may be obtained which has at least one nonlinear conditional coupling layer of which the parameters defining the nonlinear term have been trained using the training data and the conditioning data.

The trained normalizing flow model may then be used for data synthesis. While the data synthesis using a normalizing flow model is known per se, the nonlinear conditional normalizing flow model may be used to synthesize data instances on a conditional basis, namely by determining a condition for which a probable data instance is to be synthesized, sampling from the sample space having the known probability distribution, and using the sample and the condition as input to an inverse mapping, the latter being an inverse of the mapping defined by the trained normalizing flow model. Such inversion is possible and known per se as each of the layers of the normalizing flow model comprises an invertible transformation function, which includes the nonlinear coupling layer being invertible. As a result, a synthesized data instance is obtained which is likely, i.e., probable, for the specified condition, i.e., has a high probability according to the unknown but now modeled probability distribution on which the normalizing flow model was trained.

The trained normalizing flow model may also be used for inferring a probability of a data instance given a certain condition. Namely, for a particular data instance, the normalizing flow model may be applied to the data instance to obtain a mapped data instance in the sample space for which a probability may be determined. This probability may then be transformed to the original space of the data instance by determining a Jacobian determinant of the normalizing flow model as a function of the condition and by multiplying the probability of the mapped data instance with the Jacobian determinant to obtain the probability of the data instance. As a result, the conditional probability of a data instance may be determined using the trained normalizing flow model, even if the conditional probability distribution of such data instances itself is unknown.

Effectively, the normalizing flow model as defined by the model data and subsequently trained by the training system and method may provide an extension to known normalizing flow models by defining a nonlinear coupling layer, which is trained by making the parameters of the nonlinear coupling layer dependent on the conditions. This extension to conditional probabilities also allows the data synthesis and probability inference to be extended to conditional probabilities. Such conditional probabilities are highly relevant in many real-life applications, where for example such conditions may be determined from sensor data, and where the occurrence of an event, or a position of an object, etc., may be inferred given these conditions, or in which new data may be generated, e.g., representing an event which is likely to occur, a likely position of an object, etc., given these conditions.

As is also demonstrated in the detailed description, the nonlinear conditional normalizing flow model having at least one nonlinear conditional coupling layer allows complex multimodal conditional probability distributions to be modeled, which linear conditional and non-conditional normalizing flow models may be unable to do. Advantageously, the inferred probabilities and the synthesized data instances are more accurate than those inferred or synthesized using the known normalizing flow models.

Optionally, the at least one nonlinear conditional coupling layer comprises a conditional offset parameter, a conditional scaling parameter and a set of conditional parameters defining the nonlinear term. The nonlinear conditional coupling layer may thus be defined by a number of parameters, which may each be conditional parameters, in that each parameter is represented by a neural network, which is trained based on the conditioning data and thereby made conditional. In a specific example, the set of conditional parameters may define a quadratic term using three conditional parameters.

Optionally, the layers of the normalizing flow model further comprise at least one 1x1 convolution layer which comprises an invertible matrix ($M$), wherein said matrix ($M$) is parameterized by an output of a further neural network, and wherein the processor subsystem is configured to train the further neural network and thereby said parameterized matrix ($M$) as a conditional matrix which is dependent on the conditions ($c$). Normalizing flow models having 1x1 convolutional layers are known from 'Glow: Generative Flow with Invertible 1x1 Convolutions', https://arxiv.org/abs/1807.03039, and comprise an invertible matrix which may be parameterized by the output of a further neural network. This matrix is also made conditional by training the further neural network based on the conditioning data so as to establish a conditional matrix, which is dependent on the conditions. Thereby, the approach of Glow is extended to modelling conditional probability distributions.

Optionally, the layers of the normalizing flow model further comprise at least one scaling activation layer which comprises an offset parameter and a scaling parameter, wherein the offset parameter and the scaling parameter are each parameterized by an output of a respective neural network, and wherein the processor subsystem is configured to train the respective neural networks and thereby the offset parameter and the scaling parameter as a conditional offset parameter and a conditional scaling parameter which are each dependent on the conditions ($c$). The so-called scaling activation layer is an extension to NICE and is in accordance with the above measures also made conditional.

Optionally, the layers of the normalizing flow model comprise one or more subsets of layers, which each comprise:

- a nonlinear conditional coupling layer,
- a conditional 1x1 convolution layer,
- a conditional scaling activation layer, and
- a shuffling layer.

The layers of the normalizing flow model thereby comprise blocks of layers, which each comprise the above identified four layers. For example, the normalizing flow model may comprise 16 of these blocks, with each block comprising for example 8 neural networks, which may each comprise for example two or three hidden layers. Such a configuration of a normalizing flow model has been found to be able to accurately model unknown probability distributions of data in many real-life applications, for example in the modeling of trajectories of pedestrians in autonomous driving applications.

Optionally, the data instances ($x$) represent events, and wherein the conditioning data ($C$) defines conditions ($c$) associated with occurrences of the events.

Optionally, the data instances ($x$) represent spatial positions of a physical object in an environment, and wherein the conditioning data ($C$) defines at least one of a group of:

- a past trajectory of the physical object in the environment;
- an orientation of at least part of the physical object in the environment; and
- a characterization of the physical object.

In a further aspect of the invention, a control or monitoring system may be provided comprising the data synthesis system or the probability inference system, wherein the system further comprises a sensor interface for obtaining sensor data from a sensor and the processor subsystem is configured to determine the condition ($c_s$) based on the sensor data. The condition on which basis data is synthesized or a probability inferred may be based on sensor data. For example, when modeling trajectories of pedestrians in autonomous driving applications, the condition may be a pedestrian feature, such as a past trajectory of the pedestrian or a looking direction or a body orientation, which may be obtained from sensor data, for example from a camera integrated into the vehicle. It will be appreciated that, here and elsewhere, the term "obtained from sensor data" may include the sensor data being analyzed, for example to extract one or more features from the sensor data, and the condition being obtained from the one or more features. Such features may be extracted using any known type of feature extraction techniques, and may represent features such as image features, e.g., edges and corners, lidar features, audio features, etc.

Optionally, the control or monitoring system is configured to generate the output data to control an actuator or to render the output data in a sensory perceptible manner on an output device. For example, in an autonomous driving application, the control or monitoring system may control the steering or braking of the autonomous vehicle, or may generate a sensory perceptible signal for the driver so as to warn or inform the driver. Optionally, a vehicle or robot is provided comprising the control or monitoring system.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a system for training a nonlinear conditional normalizing flow model for use in data synthesis or probability inference, with the system accessing training data, conditioning data and model data on a data storage which is accessible to the system;

Fig. 2 shows a computer-implemented method for training a nonlinear conditional normalizing flow model;

Fig. 3 shows visualizations of probability distributions, showing the conditional distribution $p(y|x)$ and the corresponding $p(x)$ in the second and first columns, and in the third column the conditional probability distribution modelled by conditional affine flows, and in the fourth column the conditional probability distribution modeled by the trained nonlinear conditional normalizing flow model as obtained from the system of Fig. 1;

Fig. 4 shows a system for synthesizing data instances using a trained normalizing flow model or for inferring a probability of data instances using the normalizing flow model, with the system comprising a sensor data interface for obtaining sensor data from a sensor in an environment, and an actuator interface for providing control data to an actuator in the environment, wherein the system is configured as control system;

Fig. 5 shows the system of Fig. 4 integrated into an autonomous vehicle;

Fig. 6 shows a computer-implemented method for synthesizing data using trained normalizing flow model;

Fig. 7 shows a computer-implemented method for inferring probability using trained normalizing flow model; and

Fig. 8 shows a computer-readable medium comprising data.

It should be noted that the figures are purely diagrammatic and not drawn to scale. In the figures, elements, which correspond to elements already described, may have the same reference numerals.

## List of reference numbers

**[0033]** The following list of reference numbers is provided for facilitating the interpretation of the drawings and shall not be construed as limiting the claims.

| | |
|---|---|
| 20 | sensor |
| 22 | camera |
| 40 | actuator |
| 42 | electric motor |
| 60 | environment |

80      (semi)autonomous vehicle

100     system for training normalizing flow model
160     processor subsystem
180     data storage interface
190     data storage
192     training data
194     conditioning data
196     model data
198     trained model data

200     method for training normalizing flow model
210     accessing training data
220     accessing conditioning data
230     accessing model data
240     training nonlinear conditional normalizing flow model
250     outputting trained normalizing flow model

300     visualizations of probability distributions
310     visualization of conditional probability distribution modeled by conditional affine flows
320     visualization of conditional probability distribution modeled by trained nonlinear conditional normalizing flow model

400     system for data synthesis or probability inference
420     sensor data interface
422     sensor data
440     actuator interface
442     control data
460     processor subsystem
480     data storage interface
490     data storage

500     method for synthesizing data using trained normalizing flow model
510     accessing model data
520     synthesizing data instance
530     sampling from sample space
540     determining inverse mapping
550     determining condition
560     using the sample and condition as input to inverse mapping
570     outputting output data based on synthesized data instance

600     method for inferring probability using trained normalizing flow model
610     accessing model data
620     inferring conditional probability
630     obtaining mapped data instance in sample space
640     determining probability of mapped data instance
650     determining Jacobian determinant
660     obtaining conditional probability of data instance
670     outputting output data based on conditional probability

700     computer-readable medium
710     non-transitory data

## DETAILED DESCRIPTION OF EMBODIMENTS

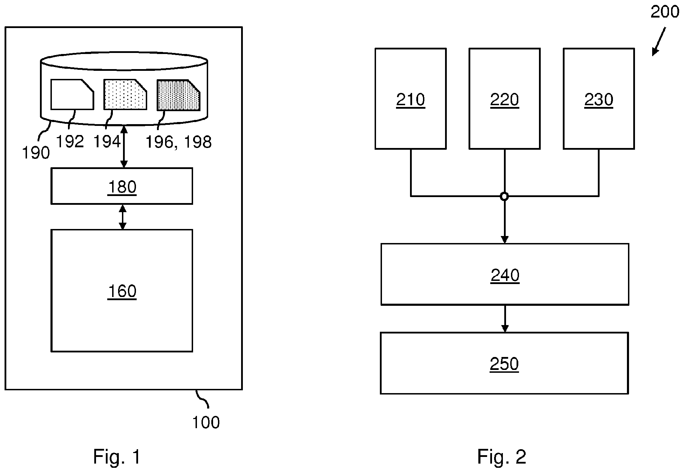

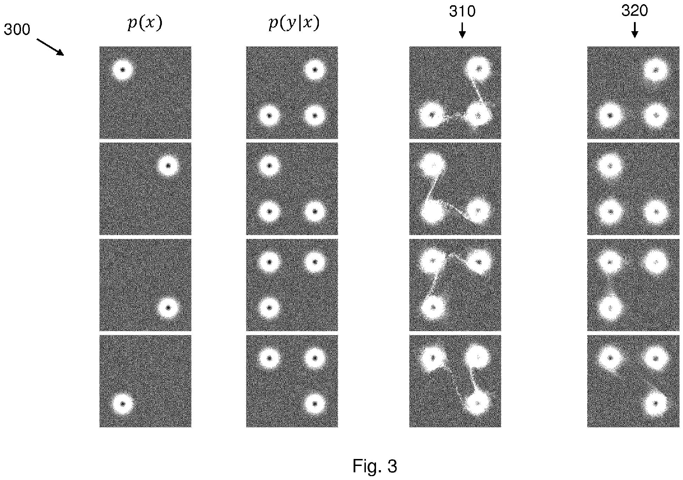

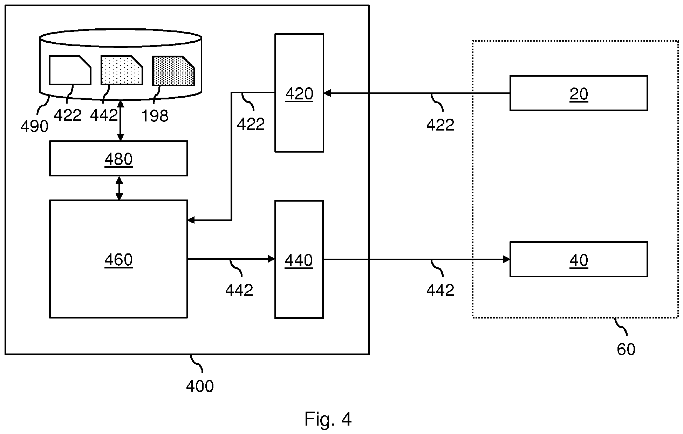

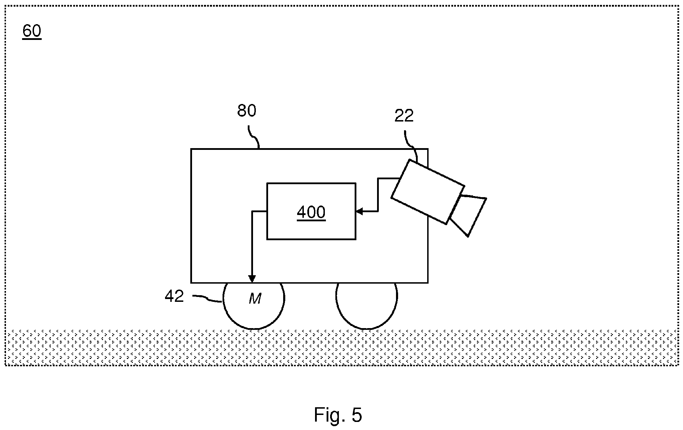

The following describes with reference to Figs. 1 and 2 the training of a normalizing flow model, then describes the normalizing flow model and its training in more detail, then describes with reference to Fig. 3 a comparison of the trained normalizing flow model to known conditional affine models, and then with reference to Figs. 4 and 5 different applications of a trained normalizing flow model, for example in an autonomous vehicle.

**Fig. 1** shows a system 100 for training a nonlinear conditional normalizing flow model for use in data synthesis or probability inference. The system 100 may comprise an input interface for accessing training data 192 comprising data instances and conditioning data 194 defining conditions for the data instances, and for accessing model data 196 defining a normalizing flow model as described further onwards in this specification. For example, as also illustrated in Fig. 1, the input interface may be constituted by a data storage interface 180, which may access the training data 192, the conditioning data 194 and the model data 196 from a data storage 190. For example, the data storage interface 180 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 190 may be an internal data storage of the system 100, such as a hard drive or SSD, but also an external data storage, e.g., a network-accessible data storage. In some embodiments, the training data 192, the conditioning data 194 and the model data 196 may each be accessed from a different data storage, e.g., via a different subsystem of the data storage interface 180. Each subsystem may be of a type as described for the data storage interface 180.

The model data 196 may define a normalizing flow model, which is configured to model a conditional probability distribution of the training data, by defining an invertible mapping to a sample space with a known probability distribution. The normalizing flow model may comprise a series of invertible transformation functions in the form of a series of layers, wherein the layers comprise at least one nonlinear coupling layer, which comprises a nonlinear term. The nonlinear term of the coupling layer may be parameterized by one or more parameters obtained as the respective outputs of one or more neural networks.

The system 100 may further comprise a processor subsystem 160 which may be configured to, during operation of the system 100, train the one or more neural networks and thereby the one or more parameters of the nonlinear term as one or more conditional parameters which are dependent on the data instances and associated conditions and which are trained using a log-likelihood-based training objective, thereby obtaining a trained normalizing flow model having at least one nonlinear conditional coupling layer.

The system 100 may further comprise an output interface for outputting trained model data 198 representing the trained normalizing flow model. For example, as also illustrated in Fig. 1, the output interface may be constituted by the data storage interface 180, with said interface being in these embodiments an input/output ('IO') interface, via which the trained model data 198 may be stored in the data storage 190. For example, the model data 196 defining the 'untrained' normalizing flow model may during or after the training be replaced by the model data 198 of the trained normalizing flow model, in that the parameters of the normalizing flow model may be adapted to reflect the training on the training data 192 and the conditioning data 194. This is also illustrated in Fig. 1 by the reference numerals 196, 198 referring to the same data record on the data storage 190. In other embodiments, the trained model data 198 may be stored separately from the model data 196 defining the 'untrained' normalizing flow model. In some embodiments, the output interface may be separate from the data storage interface 180, but may in general be of a type as described above for the data storage interface 180.

**Fig. 2** shows a computer-implemented method 200 for training a nonlinear conditional normalizing flow model for use in data synthesis or probability inference. The method 200 is shown to comprise, in a step titled "ACCESSING TRAINING DATA" accessing 210 training data comprising data instances (x). The method 200 is further shown to comprise, in a step titled "ACCESSING CONDITIONING DATA", accessing 220 conditioning data (C) defining conditions (c) for the data instances. The method 200 is further shown to comprise, in a step titled "ACCESSING MODEL DATA", accessing 230 model data as defined elsewhere in this specification. The method 200 is further shown to comprise, in a step titled "TRAINING NONLINEAR CONDITIONAL NORMALIZING FLOW MODEL", training 240 the one or more neural networks and thereby the one or more parameters of the nonlinear term as one or more conditional parameters which are dependent on the data instances (x) and associated conditions (c) and which are trained using a log-likelihood-based training objective, thereby obtaining a trained normalizing flow model having at least one nonlinear conditional coupling layer. The method 200 is further shown to comprise, in a step titled "OUTPUTTING TRAINED NORMALIZING FLOW MODEL", outputting 250 trained model data representing the trained normalizing flow model.

The following examples describe the nonlinear conditional normalizing flow model, including the training thereof, in more detail. However, the actual implementation of the nonlinear conditional normalizing flow model and its training may be carried out in various other ways, e.g., on the basis of analogous mathematical concepts.

As noted previously, a disadvantage of the prior art, such as NICE [1], is the linear/affine nature of the coupling layers of which the normalizing flow is composed. These linear coupling layers make it difficult for the normalizing flow model to learn complex multimodal distributions, as will be also illustrated with reference to Fig. 3. In addition, the normalizing flow model described by NICE can only learn unconditional probability distributions, while most problems in real-life applications require the learning of conditional probability distributions. At least some of these disadvantages are addressed by introducing at least one of the following types of layers in the normalizing flow model, being a nonlinear conditional coupling layer, a conditional 1x1 convolution layer and a conditional scaling activation layer, and by training the normalizing flow model based on conditioning data. These layers are all conditional layers, which allow the normalizing flow model, unlike known types of models, to learn more complex multimodal conditional probability distributions.

In general, as is known per se, a normalizing flow model may learn the probability distribution of a dataset X by transforming the unknown distribution $p(X)$ with a parametrized invertible mapping $f_\theta$ to a known probability distribution $p(Y)$. The probability $p(x)$ of an original datapoint $x$ (also referred to as data instance) of $X$ may be expressed as $p(y) * J$, i.e., $p(x) = p(f_\theta(x) * J_\theta(x))$. Herein, $J_\theta(x)$ is the Jacobian determinant of the invertible mapping $f_\theta(x)$ which may account for the change of probability mass due to the invertible mapping. The $p(y) = p(f_\theta(x))$ is known, since the output $y$ of the invertible mapping $f_\theta(x)$ can be computed and the probability distribution $p(y)$ is by construction known, in that typically a standard multivariate normal distribution is used. It is therefore possible to compute the probability $p(x)$ of a datapoint $x$ by computing its transformed value $y$, computing $p(y)$ and multiplying the results with the Jacobian determinant $J(x)$.

To learn the probability distribution $p(X)$, the parameters $\theta$ of the invertible mapping $f_\theta$ may be optimized, typically using a machine learning technique. The objective used for the optimization is typically the log-likelihood of the data $X$:

$$argmax \sum_X log(p(f_\theta(x)) + log\, J_\theta(x)$$

To model the invertible mapping $f_\theta(x)$ in NICE, the authors propose to compose the invertible mapping by stacking/composing so-called coupling layers. The Jacobian determinant $J$ of a number of stacked layers is simply the product of the Jacobian determinants of the individual layers, and may therefore be easy to compute.

Each coupling layer i may receive as input the variables $x_{i-1}$ from the previous layer $i - 1$ (or in case of the first layer, the input, i.e., the data points) and produces transformed variables $x_i$ which represent the output of layer $i$. For example, an individual coupling layer $f_{\theta,i}(x_{i-1}) = x_i$ may comprise an affine transformation. For example, the affine transformation may involve splitting the variables in a left and right part. Thereby, each $x_i$ may be composed of a left and right half, e.g., $x_i = [x_{i,left}, x_{i,right}]$. For example, the two halves may be a subset of the vector $x_i$. The coupling layer may then perform:

$$x_{i,right} = scale_i\left(x_{i-1,left}\right) * x_{i-1,right} + offset_i\left(x_{i-1,left}\right)$$

$$x_{i,left} = x_{i-1,left}$$

Thereby, one half of the input vector, $x_{i,left}$ may be left unchanged while the other half, $x_{i,right}$ may be modified by an affine transformation, e.g., with a scale parameter and offset parameter, which may each depend only on $x_{i,left}$ and may be trained by machine learning, for example by representing each parameter by the output of a neural network and by training the neural network based on the training data. In this type of conditional layer, because $x_{i,right}$ depends only on elements in $x_{i-1,left}$ but not in $x_{i-1,right}$, the flow defined by the conditional layer is invertible. Therefore, the Jacobian determinant of each coupling layer is just the product of the output of the scaling neural network $scale_i(x_{i-1,left})$. Also, the inverse of this affine transformation is easy to compute which facilitates easy sampling from the learned probability distribution for data synthesis.

The above-described coupling layers, which are known per se, are unconditional and can only be used to model unconditional probability distributions $p(X)$.

The following describes a nonlinear coupling layer which is made conditional, i.e., dependent also on a conditioning set $C$. This allows the normalizing flow model to learn a complex conditional probability distribution $p(X|C)$ and thereby extend the applicability of the normalizing flow model to more complex real-life applications. The nonlinear coupling layer may be made conditional by making one or more parameters in the nonlinear coupling layer, as represented by the outputs of respective neural networks, conditional not only on the input variables, e.g., $x_{i-1,left}$ but also on the conditioning set $C$. For example, the following defines a conditional nonlinear squared coupling layer:

$$x_{i,right} = offset_i\left(c, x_{i-1,left}\right) + scale_i\left(c, x_{i-1,left}\right) * x_{i-1,right}$$

$$+ O_i(c, x_{i-1,left})/(1 + P_i(c, x_{i-1,left}) * x_{i-1,right} + Q_i\left(c, x_{i-1,left}\right)^2)$$

$$x_{i,left} = x_{i-1,left}$$

The five parameters of the nonlinear conditional coupling layer may thus be:

$$offset_i = offset_i\big(c, x_{i-1,left}\big)$$

$$scale_i = scale_i\big(c, x_{i-1,left}\big)$$

$$O_i = O_i\big(c, x_{i-1,left}\big)$$

$$P_i = P_i\big(c, x_{i-1,left}\big)$$

$$Q_i = Q_i\big(c, x_{i-1,left}\big)$$

wherein all five parameters may be defined by the output of a respective neural network which depends, i.e., receives as input, a part of the output of the previous layer, e.g., $x_{i-1,left}$, and conditions $c$. The inputs may each be vectors. In addition, each parameter may be defined as a vector, in that the neural network may produce a vector as output. The multiplication and addition operations may be performed component wise. The splitting may be a vector wise split. For example, if $x_{i-1}$ is a 20x1 vector, $x_{i-1,left}$, and $x_{i-1,right}$ may each be a 10x1 vector. In general, there may be separate neural networks for each parameter for each layer. It is noted that although the above describes a nonlinear coupling layer having a quadratic term, the nonlinear coupling layer may also comprise any other higher dimensional function, e.g., a polynomial of degree 3 or 4, etc.

Using left and right halves may make the flow invertible, but other learnable and invertible transformation may be used instead. In an embodiment of the nonlinear conditional coupling layer, the left and right halves may switch after each layer. Alternatively, a permutation layer may be used, e.g., a random but fixed permutation of the elements of $x_i$. The permutation layer may be a reversible permutation of the components of a vector, which is received as input. The permutation may be randomly initialized but stay fixed during training and inference. Different permutations for each permutation layer may be used.

Similarly, an invertible 1x1 convolutional layer may also be made depend on the conditioning set $C$. This may be done by parametrizing the matrix $M$ as the output of a neural network, which depends on conditioning set $C$, i.e., receives conditions $c$ as input:

$$M_i = M_i(c)$$

Similarly, a scaling activation layer may be made depend on the conditioning set $C$ by defining the parameters $s$ and $o$ as the output of a respective neural network, which depends on conditioning set $C$, i.e., receives conditions $c$ as input:

$$x_i = s_i(c) * x_{i-1} + o_i(c)$$

Accordingly, the nonlinear conditional normalizing flow model may comprise one or more nonlinear conditional coupling layers, which are each parameterized by the output of respective neural networks. These parameters, i.e., the outputs of the respective neural networks, may be different in each layer $i$ and not only depend on a subset of $x_{i-1}$ (the transformed variables from layer $i - 1$) but also on conditions $c$ which are associated with each datapoint $x$. Thereby, the resulting modelled probability distribution also depends on the conditioning set $C$ and is thus a conditional probability distribution $P(X|C)$.

It will be appreciated that the nonlinear conditional normalizing flow model may comprise any combination of the above-mentioned nonlinear conditional layers, but may also include one or more non-conditional and/or linear layers. Compared to known normalizing flow models, one or more of the affine layers may be replaced with the nonlinear conditional coupling layer. It was found that nonlinear layers are better able to transform the probability distribution on the latent space to a normalized distribution. This is especially true if the probability distribution on the latent space has multiple modes, i.e., is multi-modal.

**Fig. 3** shows visualizations of probability distributions in the form of respective probability density maps, showing visualizations of the conditional distribution $p(y|x)$ and the corresponding $p(x)$ in the second and first columns, and in the third column a visualization 310 of the conditional probability distribution $p(y|x)$ modelled by conditional affine flows as described by [2]. The fourth column shows a visualization 320 of the conditional probability distribution $p(y|x)$ modelled by the conditional nonlinear squared flows ('Cond NSqL') having the five parameters as described above. It can be seen that the estimated density by the conditional affine flows of [2] contains distinctive "tails". In comparison, the estimated density by the conditional nonlinear squared flows does not have distinctive "tails" which indicates that it is able to better capture the multi-modal distribution.

In general, the nonlinear conditional normalizing flow model may comprise multiple layers, of different types. For example, layers of the nonlinear conditional normalizing flow model may be organized in blocks, each block comprising multiple layers. For example, in an embodiment, a block comprises a nonlinear conditional coupling layer, a conditional 1x1 convolution layer, a conditional scaling activation layer, and a shuffling layer. The normalizing flow model may have multiple of such blocks, e.g., 2 or more, 4 or more, 16 or more, etc. It will be appreciated that the number of neural networks in the nonlinear conditional normalizing flow model may be sizable, e.g., more than 10 or even more than 100. Furthermore, the networks may have multiple outputs, e.g., vectors or matrices. Learning these neural networks may be based on known techniques such as maximum likelihood learning, etc., and may in general use a log-likelihood-based training objective.

The resulting trained normalizing flow model may in general be used for data synthesis and probability inference. Such uses are known per se, and may in the case of data synthesis make use of the invertible nature of the layers of the normalizing flow model. The trained nonlinear conditional normalizing flow model may specifically enable conditional data synthesis and probability inference, in that data instances may be synthesized which are probable given a condition, or a probability given the condition may be inferred.

For example, when used in a so-called 'forward mode', the trained normalizing flow model may be used to query a datapoint $x$ for its conditional probability/likelihood based on a condition $c$. Such a condition $c$ may be a condition which is obtained, directly or indirectly, from sensor data, and may therefore also be referred to as $c_s$ with 's' referring to 'sensor'. The data point or data instance, which is queried, may be referred to as $x_q$ with 'q' referring to 'queried'. Accordingly, a probability of a data instance $x_q$ given a condition $c_s$ may be inferred by applying the trained normalizing flow model to the data instance $x_q$ to obtain a mapped data instance $y$ in the sample space $Y$, by determining a probability of the mapped data instance $y$ in the sample space using the known probability distribution, by determining a Jacobian determinant of the normalizing flow model as a function of the condition $c_s$ and by multiplying the probability of the mapped data instance $y$ with the Jacobian determinant to obtain the probability of the data instance $x_q$. As will be described with reference to Figs. 4 and 5, the inferred probability may be used to generate various types of output data, including but not limited to control data for an actuator.

When used in a so-called 'reverse mode', the trained normalizing flow model may be used to synthesize new datapoints or data instances, which are in the following also referred to as $x_g$ with 'g' standing for 'generated'. Briefly speaking, such data synthesis may involve sampling from the known prior distribution $p(Y)$, and then passing the generated sample in in reverse mode through the nonlinear conditional normalizing flow model. Thereby, a generative model is established which can generate samples from a conditional probability distribution $p(X|C)$. More specifically, a data instance $x_g$ maybe synthesized from the conditional probability distribution of the data by sampling from the sample space to obtain a sample $y$, determining an inverse of the mapping defined by the trained normalizing flow model, determining a condition $c_s$ for said synthesized data instance, for example directly or indirectly from sensor data, and using the sample y and the condition $c_s$ as an input to said inverse mapping to obtain said synthesized data instance $x_g$.

**Fig. 4** shows a system 400 for synthesizing data instances using a trained normalizing flow model and/or for inferring a probability of data instances using the normalizing flow model. The system 400 may comprise an input interface 480 for accessing trained model data 198 representing a trained normalizing flow model as may be generated by the system 100 of Fig. 1 or the method 200 of Fig. 2 or as described elsewhere. For example, as also illustrated in Fig. 4, the input interface may be constituted by a data storage interface 480, which may access the trained model data 198 from a data storage 490. In general, the input interface 480 and the data storage 490 may be of a same type as described with reference to Fig. 1 for the input interface 180 and the data storage 190.

The system 400 may further comprise a processor subsystem 460 which may be configured to, during operation of the system 400, infer conditional probabilities of data instances using the trained normalizing flow model, e.g., in a manner as described elsewhere in this specification, and/or synthesize data instances using the trained normalizing flow model, e.g., in a manner as described elsewhere in this specification.

It will be appreciated that the same considerations and implementation options apply for the processor subsystem 460 as for the processor system 160 of Fig. 1. It will be further appreciated that the same considerations and implementation options may in general apply to the system 400 as for the system 100 of Fig. 1, unless otherwise noted.

Fig. 4 further shows various optional components of the system 400. For example, in some embodiments, the system 400 may comprise a sensor data interface 420 for accessing sensor data 422 acquired by a sensor 20 in an environment 60. In such embodiments, the processor subsystem 460 may be configured to determine a condition $c_s$ on which basis a datapoint is to be synthesized or for which the conditional probability of a data point is to be inferred based on the sensor data 422, for example by analyzing the sensor data. In a specific example, the condition $c_s$ maybe one

or a set of features which may be extracted by the processor subsystem 460 from the sensor data 422 using a feature extraction technique, which feature extraction technique may be known per se. In general, the sensor data interface 420 may have any suitable form, including but not limited to a low-level communication interface, e.g., based on I2C or SPI data communication, or a data storage interface of a type as described above for the data storage interface 480.

In some embodiments, the system 400 may comprise an actuator interface 440 for providing control data 442 to an actuator 40 in the environment 60. Such control data 442 may be generated by the processor subsystem 460 to control the actuator 40 based on one or more inferred probabilities and/or synthesized datapoints, both of which may be generated using the trained normalizing flow model. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 5 for an autonomous vehicle.

In other embodiments (not shown in Fig. 4), the system 400 may comprise an output interface to a rendering device, such as a display, a light source, a loudspeaker, a vibration motor, etc., which may be used to generate a sensory perceptible output signal which may be generated based on one or more inferred probabilities and/or synthesized datapoints. The sensory perceptible output signal may be directly indicative of the inferred probabilities and/or synthesized datapoints, but may also represent a derived sensory perceptible output signal, e.g., for use in guidance, navigation or other type of control.

In general, each system described in this specification, including but not limited to the system 100 of Fig. 1 and the system 400 of Fig. 4, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 400 may be part of vehicle, robot or similar physical entity, and/or may be represent a control system configured to control the physical entity.

**Fig. 5** shows an example of the above, in that the system 400 is shown to be a control system of an (semi)autonomous vehicle 80 operating in an environment 60. The autonomous vehicle 80 may be autonomous in that it may comprise an autonomous driving system or a driving assistant system, with the latter also being referred to as a semiautonomous system. The autonomous vehicle 80 may for example incorporate the system 400 to control the steering and the braking of the autonomous vehicle based on sensor data obtained from a video camera 22 integrated into the vehicle 80. For example, the system 400 may control an electric motor 42 to perform (regenerative) braking in case the autonomous vehicle 80 is expected to collide with a traffic participant. The system 400 may control the steering and/or braking to avoid collision with the traffic participant. For that purpose, the system 400 may extract features associated with the traffic participant from the sensor data and infer a probability that the traffic participant is on a trajectory in which it will collide with the vehicle based on the extracted features as conditions, and/or by synthesizing likely trajectories of the traffic participant based on the extracted features as conditions.

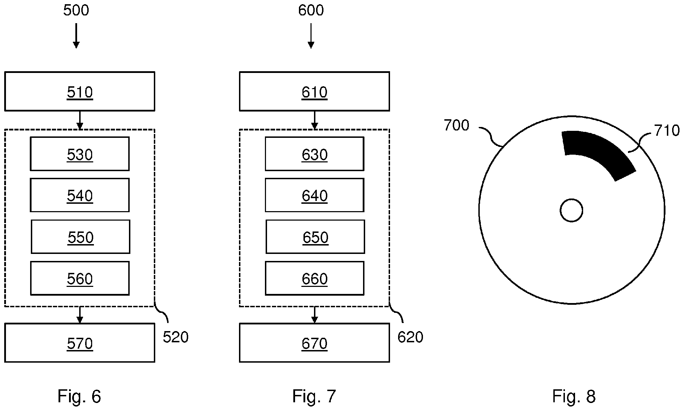

**Fig. 6** shows a computer-implemented method 500 for synthesizing data using trained normalizing flow model. The method 500 may correspond to an operation of the system 400 of Fig. 4, but may alternatively also be performed using or by any other system, apparatus or device. The method 500 is shown to comprise, in a step titled "ACCESSING MODEL DATA", accessing 510 model data as for example defined elsewhere in this specification. The method 500 is further shown to comprise, in a step titled "SYNTHESIZING DATA INSTANCE", synthesizing 520 a data instance ($x_g$) from the conditional probability distribution of the data by, in a step titled "SAMPLING FROM SAMPLE SPACE", sampling 530 from the sample space to obtain a sample (y), in a step titled "DETERMINING INVERSE MAPPING", determining 540 an inverse of the mapping defined by the trained normalizing flow model, in a step titled "DETERMINING CONDITION", determining 550 a condition ($c_s$) for said synthesized data instance, and in a step titled "USING THE SAMPLE AND CONDITION AS INPUT TO INVERSE MAPPING", using 560 the sample (y) and the condition ($c_s$) as an input to said inverse mapping to obtain said synthesized data instance ($x_g$). The method 500 is further shown to comprise, in a step titled "OUTPUTTING OUTPUT DATA BASED ON SYNTHESIZED DATA INSTANCE", outputting 570 output data based on the synthesized data instance.

**Fig. 7** shows a computer-implemented method 600 for inferring probability using trained normalizing flow model. The method 600 may correspond to an operation of the system 400 of Fig. 4, but may alternatively also be performed using or by any other system, apparatus or device. The method 600 is shown to comprise, in a step titled "ACCESSING MODEL DATA", accessing 610 model data as defined elsewhere in this specification. The method 600 is further shown to comprise, in a step titled "INFERRING CONDITIONAL PROBABILITY", inferring 620 a probability of a data instance

($x_g$) given a condition ($c_s$) by, in a step titled "OBTAINING MAPPED DATA INSTANCE IN SAMPLE SPACE", applying 630 the normalizing flow model to the data instance ($x_0$) to obtain a mapped data instance ($y$) in the sample space ($Y$), in a step titled "DETERMINING PROBABILITY OF MAPPED DATA INSTANCE", determining 640 a probability of the mapped data instance ($y$) in the sample space using the known probability distribution, in a step titled "DETERMINING JACOBIAN DETERMINANT" determining 650 a Jacobian determinant of the normalizing flow model as a function of the condition ($c_s$), and in a step titled "OBTAINING CONDITIONAL PROBABILITY OF DATA INSTANCE", multiplying 660 the probability of the mapped data instance ($y$) with the Jacobian determinant to obtain the probability of the data instance ($x_g$). The method 600 is further shown to comprise, in a step titled "OUTPUTTING OUTPUT DATA BASED ON CONDITIONAL PROBABILITY", outputting 670 output data based on the probability of the data instance ($x_g$).

It will be appreciated that, in general, the operations of the computer-implemented methods 200, 500 and 600 of respectively Figs. 2, 6 and 7 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in **Fig. 8,** instructions for the computer, e.g., executable code, may be stored on a computer readable medium 700, e.g., in the form of a series 710 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 8 shows an optical disc 700. In an alternative embodiment, the computer readable medium 700 may comprise trained model data 710 defining a trained nonlinear conditional normalizing flow model as described elsewhere in this specification.

Examples, embodiments or optional features, whether indicated as non-limiting or not, are not to be understood as limiting the invention as claimed.

In accordance with an abstract of the specification, it is noted that the learning of probability distributions of data enables various applications, including but not limited to data synthesis and probability inference. A conditional non-linear normalizing flow model, and a system and method for training said model, are provided. The normalizing flow model may be trained to model unknown and complex conditional probability distributions which are at the heart of many real-life applications. For example, the trained normalizing flow model may be used in (semi)autonomous driving systems to infer what the probability is that a pedestrian is at position $x$ at future time $t$ given the pedestrian features $c$, which may be observed from sensor data, or may be used to synthesize likely pedestrian positions $x$ at future time t given the observed pedestrian features $c$. This may allow the driving system to determine a route avoiding the pedestrian. Various other applications for the trained normalizing flow model are conceived as well.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A **training system** (100) for training a normalizing flow model for use in data synthesis or probability inference, comprising:

    - an input interface (180) for accessing:

        - training data (192) comprising data instances ($x$);
        - conditioning data (194) defining conditions ($c$) for the data instances;
        - model data (196) defining a normalizing flow model which is configured to model a conditional probability distribution of the training data by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term, wherein the nonlinear term is parameterized by one or more parameters obtained as the respective outputs of one or more neural networks;

- a processor subsystem (160) configured to train the one or more neural networks and thereby the one or more parameters of the nonlinear term as one or more conditional parameters which are dependent on the data instances ($x$) and associated conditions ($c$) and which are trained using a log-likelihood-based training objective, thereby obtaining a trained normalizing flow model having at least one nonlinear conditional coupling layer; and

- an output interface (180) for outputting trained model data (198) representing the trained normalizing flow model.

2. The training system (100) according to claim 1, wherein the at least one nonlinear conditional coupling layer comprises a conditional offset parameter, a conditional scaling parameter and a set of conditional parameters defining the nonlinear term.

3. The training system (100) according to any one of claim 1 or 2, wherein the layers of the normalizing flow model further comprise at least one 1x1 convolution layer which comprises an invertible matrix ($M$), wherein said matrix ($M$) is parameterized by an output of a further neural network, and wherein the processor subsystem is configured to:

- train the further neural network and thereby said parameterized matrix ($M$) as a conditional matrix which is dependent on the conditions ($c$).

4. The training system (100) according to any one of claims 1 to 3, wherein the layers of the normalizing flow model further comprise at least one scaling activation layer which comprises an offset parameter and a scaling parameter, wherein the offset parameter and the scaling parameter are each parameterized by an output of a respective neural network, and wherein the processor subsystem is configured to:

- train the respective neural networks and thereby the offset parameter and the scaling parameter as a conditional offset parameter and a conditional scaling parameter which are each dependent on the conditions ($c$).

5. The training system (100) according to any one of claims 1 to 4, wherein the layers of the normalizing flow model comprise one or more subsets of layers which each comprise:

- a nonlinear conditional coupling layer,
- a conditional 1x1 convolution layer,
- a conditional scaling activation layer, and
- a shuffling layer.

6. The training system (100) according to any one of claims 1 to 5, wherein the data instances ($x$) represent events, and wherein the conditioning data (194) defines conditions ($c$) associated with occurrences of the events.

7. The training system (100) according to claim 6, wherein the data instances ($x$) represent spatial positions of a physical object in an environment, and wherein the conditioning data ($C$) defines at least one of a group of:

- a past trajectory of the physical object in the environment;
- an orientation of at least part of the physical object in the environment; and
- a characterization of the physical object.

8. A computer-readable medium (700) comprising transitory or non-transitory data (710) representing model data defining a **normalizing flow model** which is configured to model a conditional probability distribution of data comprising data instances ($x$) by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term which is parameterized by one or more conditional parameters obtained as the respective outputs of one or more trained neural networks and which are dependent on the data instances ($x$) and associated conditions ($c$).

9. A **data synthesis system** (400) for synthesizing data instances using a trained normalizing flow model, comprising:

- an input interface (480) for accessing:

- model data (198) defining a trained normalizing flow model which is configured to model a conditional probability distribution of data comprising data instances ($x$) by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term which is parameterized by one or more conditional parameters obtained as the respective outputs of one or more trained neural networks and which are dependent on the data instances ($x$) and associated conditions ($c$); and

- a processor subsystem (460) configured to synthesize a data instance ($x_g$) from the conditional probability distribution of the data by:

- sampling from the sample space to obtain a sample ($y$);
- determining an inverse of the mapping defined by the trained normalizing flow model; and
- determining a condition ($c_s$) for said synthesized data instance;
- using the sample ($y$) and the condition ($c_s$) as an input to said inverse mapping to obtain said synthesized data instance ($x_g$); and

- an output interface (440) for outputting output data (442) based on the synthesized data instance.

10. A **probability inference system** (400) for inferring a probability of data instances using a normalizing flow model, comprising:

- an input interface (480) for accessing:

- model data (198) defining a trained normalizing flow model which is configured to model a conditional probability distribution of data comprising data instances ($x$) by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term which is parameterized by one or more conditional parameters obtained as the respective outputs of one or more trained neural networks and which are dependent on the data instances ($x$) and associated conditions ($c$);

- a processor subsystem (460) configured to infer a probability of a data instance ($x_q$) given a condition ($c_s$) by:

- applying the normalizing flow model to the data instance ($x_q$) to obtain a mapped data instance ($y$) in the sample space ($Y$);
- determining a probability of the mapped data instance ($y$) in the sample space using the known probability distribution;
- determining a Jacobian determinant of the normalizing flow model as a function of the condition ($c_s$);
- multiplying the probability of the mapped data instance ($y$) with the Jacobian determinant to obtain the probability of the data instance ($x_q$);

- an output interface (440) for outputting output data (442) based on the probability of the data instance ($x_q$).

11. A **control or monitoring system** (400) comprising the data synthesis system according claim 9 or the probability inference system according to claim 10, further comprising a sensor data interface (420) for obtaining sensor data (422) from a sensor (20, 22), wherein the processor subsystem (460) is configured to determine the condition ($c_s$) based on the sensor data.

12. The **control or monitoring system** (400) according to claim 11, configured to generate the output data (442) to control an actuator (40) or to render the output data in a sensory perceptible manner on an output device.

13. A computer-implemented method (200) for **training a normalizing flow model** for use in data synthesis or probability inference, comprising:

- accessing (210, 220, 230):

- training data comprising data instances ($x$);

- conditioning data ($C$) defining conditions ($c$) for the data instances;
- model data defining a normalizing flow model which is configured to model a conditional probability distribution of the training data by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term, wherein the nonlinear term is parameterized by one or more parameters obtained as the respective outputs of one or more neural networks;

- training (240) the one or more neural networks and thereby the one or more parameters of the nonlinear term as one or more conditional parameters which are dependent on the data instances ($x$) and associated conditions ($c$) and which are trained using a log-likelihood-based training objective, thereby obtaining a trained normalizing flow model having at least one nonlinear conditional coupling layer; and
- outputting (250) trained model data representing the trained normalizing flow model.

14. A computer-implemented method (500) for **synthesizing data** instances using a trained normalizing flow model, comprising:

- accessing (510):

- model data defining a trained normalizing flow model which is configured to model a conditional probability distribution of data comprising data instances ($x$) by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term which is parameterized by one or more conditional parameters obtained as the respective outputs of one or more trained neural networks and which are dependent on the data instances ($x$) and associated conditions ($c$); and

- synthesizing (520) a data instance ($x_g$) from the conditional probability distribution of the data by:

- sampling (530) from the sample space to obtain a sample ($y$);
- determining (540) an inverse of the mapping defined by the trained normalizing flow model; and
- determining (550) a condition ($c_s$) for said synthesized data instance;
- using (560) the sample ($y$) and the condition ($c_s$) as an input to said inverse mapping to obtain said synthesized data instance ($x_g$); and

- outputting (570) output data based on the synthesized data instance.

15. A computer-implemented method (600) for **inferring a probability** of data instances using a normalizing flow model, comprising:

- accessing (610):

- model data defining a trained normalizing flow model which is configured to model a conditional probability distribution of data comprising data instances ($x$) by defining an invertible mapping to a sample space ($Y$) with a known probability distribution, wherein the normalizing flow model comprises a series of invertible transformation functions in the form of a series of layers, wherein the layers comprise at least one nonlinear coupling layer which comprises a nonlinear term which is parameterized by one or more conditional parameters obtained as the respective outputs of one or more trained neural networks and which are dependent on the data instances ($x$) and associated conditions ($c$);

- inferring (620) a probability of a data instance ($x_q$) given a condition ($c_s$) by:

- applying (630) the normalizing flow model to the data instance ($x_q$) to obtain a mapped data instance ($y$) in the sample space ($Y$);
- determining (640) a probability of the mapped data instance ($y$) in the sample space using the known probability distribution;
- determining (650) a Jacobian determinant of the normalizing flow model as a function of the condition ($c_s$);
- multiplying (660) the probability of the mapped data instance ($y$) with the Jacobian determinant to obtain the probability of the data instance ($x_q$);

- outputting (670) output data based on the probability of the data instance ($x_q$).

16. A computer-readable medium (700) comprising transitory or non-transitory data (710) representing instructions arranged to cause a processor system to perform the computer-implemented method according to any one of claims 13 to 15.

Fig. 1

Fig. 2

Fig. 3

Fig. 4

Fig. 5

500

510

530

540

550

560

570

520

Fig. 6

600

610

630

640

650

660

670

620

Fig. 7

700

710

Fig. 8

Europäisches
Patentamt

European
Patent Office

Office européen
des brevets

## EUROPEAN SEARCH REPORT

Application Number

EP 19 18 6780

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAKUB M TOMCZAK ET AL: "VAE with a VampPrior", ARXIV.ORG, CORNELL UNIVERSITY LIBRARY, 201 OLIN LIBRARY CORNELL UNIVERSITY ITHACA, NY 14853, 19 May 2017 (2017-05-19), XP081317719, | 1,8-10, 13-16 | INV. G06N3/04 G06N3/08 |
| Y | * abstract; figures 1-4 * * page 1, left-hand column, line 1 - page 8, left-hand column, last line * ----- | 2-7,11, 12 | |
| Y | YOU LU ET AL: "Structured Output Learning with Conditional Generative Flows", ARXIV.ORG, CORNELL UNIVERSITY LIBRARY, 201 OLIN LIBRARY CORNELL UNIVERSITY ITHACA, NY 14853, 30 May 2019 (2019-05-30), XP081366227, | 2-7,11, 12 | |
| A | * abstract; figures 1-5 * * page 1, line 1 - page 7, last line * ----- | 1,8-10, 13-16 | |
| A | APRATIM BHATTACHARYYA ET AL: "Bayesian Prediction of Future Street Scenes using Synthetic Likelihoods", ARXIV.ORG, CORNELL UNIVERSITY LIBRARY, 201 OLIN LIBRARY CORNELL UNIVERSITY ITHACA, NY 14853, 1 October 2018 (2018-10-01), XP081054605, * abstract; figures 1-6 * * page 1, line 1 - page 8, last line * ----- | 6,7,11, 12 | TECHNICAL FIELDS SEARCHED (IPC) G06N |
| A | CN 108 171 324 A (UNIV TIANJIN SCIENCE & TECH) 15 June 2018 (2018-06-15) * abstract; figures 1-5 * * paragraph [0001] - paragraph [0037] * * paragraph [0043] - paragraph [0077] * ----- | 1-16 | |

-/--

The present search report has been drawn up for all claims

| Place of search | Date of completion of the search | Examiner |
|---|---|---|
| The Hague | 16 January 2020 | Totir, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | APRATIM BHATTACHARYYA ET AL: "Conditional Flow Variational Autoencoders for Structured Sequence Prediction", ARXIV.ORG, CORNELL UNIVERSITY LIBRARY, 201 OLIN LIBRARY CORNELL UNIVERSITY ITHACA, NY 14853, 24 August 2019 (2019-08-24), XP081503072, * abstract; figures 1-9 * * page 1, line 1 - page 8, last line * * page 12, line 1 - page 16, last line * ----- | 1-16 | |

**TECHNICAL FIELDS SEARCHED (IPC)**

The present search report has been drawn up for all claims

| Place of search | Date of completion of the search | Examiner |
|---|---|---|
| The Hague | 16 January 2020 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 6780

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2020

| Patent document cited in search report | Publication date | Patent family member(s) | Publication date |
|---|---|---|---|
| CN 108171324 A | 15-06-2018 | NONE | |

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAURENT DINH et al.** *NICE - Nonlinear independent component estimation, https://arxiv.org/abs/1410.8516*

- **ANDREI ATANOV et al.** *Semi-conditional normalizing flows for semi-supervised learning, https://arxiv.org/abs/1905.00505*